Europäisches Patentamt

**European Patent Office**

Office européen des brevets

(11) Veröffentlichungsnummer: **0 009 579**
**A1**

(12) **EUROPÄISCHE PATENTANMELDUNG**

(21) Anmeldenummer: 79102956.4

(22) Anmeldetag: 14.08.79

(51) Int. Cl.³: **G 11 B 15/02**
**G 11 B 15/06**

(30) Priorität: 15.09.78 DE 2840328

(43) Veroffentlichungstag der Anmeldung:
16.04.80 Patentblatt 80/8

(84) Benannte Vertragsstaaten:
AT BE CH FR GB IT NL SE

(71) Anmelder: SIEMENS AKTIENGESELLSCHAFT Berlin
und München
Postfach 22 02 61
D-8000 München 22(DE)

(72) Erfinder: Kuznia, Chirstran, Dr.
Demblerstrasse 23
D-8000 München 90(DE)

(54) Betriebssystem mit Steuereinrichtung zum gezielten Aufrufen von auf elektromotorisch bewegten Informationsträgern, insbesondere Magnetbändern, gespeicherten Informationsfolgen.

(57) Auf einem Informationsträger, beispielsweise einem Magnettonband finden im allgemeinen mehrere, einzeln voneinander unabhängige Aufzeichnungen Platz. Bei bekannten Anordnungen werden alle Aufzeichnungen in einer der Aufzeichnungsreihenfolge gleichen Reihenfolge wiedergegeben. Will der Benutzer einer solchen Anordung eine bestimmte Aufzeichnung wiedergeben, so ist er gezwungen, einen schnellen Vor-oder Rücklauf des betreffenden Informationsträgers unter Beobachtung eines in aller Regel vorhandenen "Bandzählers" von Hand zu starten und zu stoppen, bis die gewünschte Stelle auf dem Informationsträger eingestellt ist. Aufgabe der Erfindung ist, dem Benutzer ein Betriebssystem zur Verfügung zu stellen, mittels dessen Aufzeichnungen in beliebig vorgebbarer Reihenfolge wiedergegeben werden können, ohne daß während des Ablaufs eines solchen Programms Eingriffe vorzunehmen sind. Zur Lösung dieser Aufgabe werden mittels Mikroprozessor (1) und Programmspeicher (21) vom Benutzer in einen Abspielinformationsspeicher (22) eingegebene Daten mit Adressen für Informationsfolgen bildenden Längenzählerstellungen bzw. vor den Anfang und hinter das Ende der betreffenden Informationsfolge gespeicherten Zeichen in Beziehung gesetzt. Bei sich einstellender Zeichengleichheit ist der wiederzugebende Informationsträgerabschnitt aufgefunden.

./...

0009579

SIEMENS AKTIENGESELLSCHAFT          Unser Zeichen
Berlin und München                 VPA 78 P 7 1 1 9

Betriebssystem zum gezielten Aufrufen von auf elektromotorisch bewegten Informationsträgern, insbesondere
Magnetschichtbändern, gespeicherten Informationsfolgen

Die Erfindung betrifft ein Betriebssystem zum gezielten
Aufrufen von auf elektromotorisch bewegten Informationsträgern, insbesondere Magnetschichtbändern, gespeicherten Informationsfolgen.

Auf einem Informationsträger, beispielsweise einem
Magnettonband, wie es auf dem Gebiet der Unterhaltungselektronik zum Aufzeichnen von Musik oder Sprache vielfach verwendet wird, finden im allgemeinen mehrere, einzeln voneinander unabhängige Aufzeichnungen Platz. Bei
bekannten Anordnungen werden alle Aufzeichnungen in
einer der Aufzeichnungsreihenfolge gleichen Reihenfolge
wiedergegeben. Will der Benutzer einer solchen Anordnung
eine bestimmte Aufzeichnung wiedergeben, so ist er gezwungen, einen schnellen Vor- oder Rücklauf des betreffenden Informationsträgers unter Beobachtung eines

Pap1The / 13.9.1978

in aller Regel vorhandenen "Bandzählers" von Hand zu starten und zu stoppen. Es ist bei einem solchen Vorgang durchaus wahrscheinlich, daß die genannte Manipulation auf Grund der relativ hohen Laufgeschwindigkeit mehrmals wiederholt werden muß, bis die gewünschte Stelle auf dem Informationsträger eingestellt ist.

Abgesehen von dem dafür erforderlichen Zeitaufwand ist es bei Anordnungen aus dem Gebiet der Unterhaltungselektronik nachteilig, daß der zu erwartende Hörgenuß durch die genannten Manipulationen beeinträchtigt wird.

Es ist Aufgabe der Erfindung, dem Benutzer einer Anordnung der genannten Art ein Betriebssystem zur Verfügung zu stellen, mittels dessen Aufzeichnungen gemäß einer beliebig vorgebbaren Reihenfolge wiedergegeben werden können. Der Benutzer soll in die Lage versetzt sein können, ein individuell zusammenstellbares Wiedergabeprogramm ohne während des Ablaufs eines solchen Programms vorzunehmende Eingriffe ablaufen zu lassen.

Die Aufgabe der Erfindung wird durch ein Betriebssystem zum gezielten Aufrufen von auf elektromotorisch bewegten Informationsträgern, insbesondere Magnetschichtbändern, gespeicherten Informationsfolgen, insbesondere Musik und/oder Sprachaufzeichnungen gelöst, das dadurch gekennzeichnet ist, daß die einzelnen Informationsfolgen auf dem Informationsträger durch individuelle, als Adressen dienende, jeweils eine bestimmte Informationsfolge kennzeichnende Zeichenkombination eingeschlossen sind, daß ein durch ein Informationsträger-Anfangs- und/oder Endsignal in seiner Stellung definierter, bewegungsrichtungsabhängig vorwärts oder rückwärts arbeitender Längenzähler vorgesehen ist, daß zum Aufrufen einer vorgegebenen Informationsfolge die Stellungen des Längenzählers ständig in Beziehung mit vorgegebenen, der jeweils betreffenden Zeichenkombination entsprechenden Daten gesetzt werden, daß eine Antriebssteuerung vorgesehen ist, mittels derer zumindest eine Antriebsvorrichtung einschaltbar, ausschaltbar und/oder in ihrer Laufrichtung umschaltbar zu machen ist, und daß eine Bedienungseinrichtung vorgesehen ist, mittels derer beliebige Zeichenkombinationen auf dem Informationsträger aufzeichenbar und beliebige Informationsfolgen-Kombinationen vom Informationsträger aufrufbar zu machen sind.

Die Erfindung bietet den Vorteil, daß im Gegensatz zur Betriebsweise von bekannten Anordnungen der genannten Art dem Benutzer die Möglichkeit gegeben ist, ein individuell zusammenstellbares Wiedergabeprogramm der aufgezeichneten Informationsfolgen ohne während des Ablaufs eines solchen Programms vorzunehmende Eingriffe ablaufen zu lassen.

Weiterbildungen der Erfindung sind durch die in den Unteransprüchen angegebenen Merkmale gekennzeichnet.

Im folgenden soll die Erfindung an Hand einer ein Ausführungsbeispiel für die Erfindung betreffenden Figur erläutert werden.

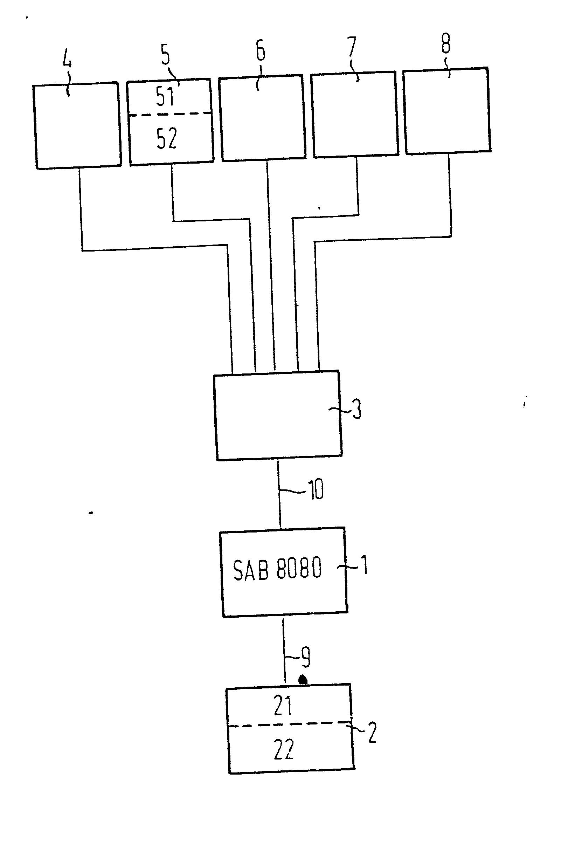

Die Figur zeigt das Blockschaltbild einer Steuereinrichtung für das erfindungsgemäße Betriebssystem, bei der ein Mikroprozessor (1) vorgesehen ist, der einerseits über eine Datenleitung (9) mit einem Speicher (2) und andererseits über eine Befehls-/Informationsleitung (10) mit einer Schnittstellenschaltung (3) verbunden ist. Der Speicher (2) ist in zwei Bereiche, nämlich einen Programmspeicher (21) und einen Abspielinformationsspeicher (22) aufgeteilt. An die Schnittstellenschaltung (3) sind eine Ziffernanzeige (4), eine Bedienungseinrichtung (5), ein Anfangs-/Endeschalter (6),
ein Längenzähler (7) und eine Antriebssteuerung (8)
jeweils über individuelle Leitungen angeschlossen. Die
Bedienungseinrichtung (5) enthält ein Tastenfeld (51)
und ein Betriebsartenschalterfeld (52). Der Speicher (2)
ist vorteilhaft als Halbleiterspeicher auszuführen. Ein
Ausführungsbeispiel für die Erfindung sieht vor, daß
der Speicher (2) als RAM mit geringem Leistungsbedarf
ausgeführt ist, der zur Sicherung gespeicherter Daten
aus einer Pufferstromversorgung, vorzugsweise einer
Pufferbatterie, versorgt ist. In einem anderen Ausführungsbeispiel für die Erfindung ist ein reprogrammierbarer permanenter Speicher für den Speicher (2) vorgesehen. Ein solcher Speicher ist vorteilhaft in NMOS-
Technologie realisiert. Mit Hilfe der Ziffernanzeige
(4) können dem Benutzer von ihm eingegebene Programmdaten optisch bestätigt werden und aktuelle Programmdaten und Betriebsdaten, wie Störungsmeldungen u.a.m.
sichtbar gemacht werden. Der Längenzähler (7) empfängt
aus einer Zusatzvorrichtung, die in der Figur 1 nicht
gezeigt ist, bei jedem Wechsel der Zählstellung des
in aller Regel mechanischen Zählwerks zum Registrieren
der Weglänge bei einem Aufzeichnungs-/Wiedergabegerät
der genannten Art einen Signalimpuls. Bei Aufzeichnung, beispielsweise eines Musikstückes mit Hilfe
eines Spulentonbandgerätes, eines Kassettentonbandgerätes oder einer artverwandten Einrichtung wird erfindungsgemäß die das als Beispiel betrachtete Musikstück repräsentierende Informationsfolge auf dem Informationsträger durch eine ebenfalls auf dem Informationsträger aufzuzeichnende Zeichenkombination gekennzeichnet. Diese Kennzeichnung vor dem Anfang bzw. nach dem Ende der Informationsfolge dient als Adresse zum Auffinden der betreffenden Informationsfolge. Im einfachsten Falle ist eine solche Zeichenkombination unmittelbar oder mittelbar aus der jeweils geltenden Zählstellung des Längenzählers (7) ableitbar. Es ist jedoch auch vorteilhaft, wenn der Benutzer von sich aus mit Hilfe des Tastenfeldes (51) für seine Belange günstige, beliebige Zeichenkombinationen zur Adressierung von Informationsfolgen aufzeichnen kann. In aller Regel ist eine Zeichenkombination aus zwei identischen Zeichen, wovon eines vor dem Anfang und eines nach dem Ende der zu kennzeichnenden Informationsfolge aufgezeichnet ist, zusammengesetzt. Es kann jedoch auch vorteilhaft sein, daß eine solche Zeichenkombination jeweils aus zwei nicht identischen, jedoch in einer festen Beziehung zueinander stehenden Zeichen besteht. Gemäß einer Weiterbildung der Erfindung werden bei Anwendung des erfindungsgemäßen Betriebssystems für Aufzeichnungs-/Wiedergabeeinrichtungen, die als Spulentonbandgeräte, Kasettentonbandgeräte oder artverwandte Einrichtungen zum Aufzeichnen von aus analogen Signalen bestehenden Informationsfolgen, vorzugsweise Musik- und/oder Sprachstücken ausgeführt sind, die kennzeichnenden Zeichenkombinationen als durch einen Mehrfrequenzcode (MFC) repräsentierte Signale aufgezeichnet.

Wie bereits erwähnt, werden bei dem erfindungsgemäßen Betriebssystem die einzelnen Informationsfolgen auf dem Informationsträger durch individuelle, als Adressen dienende, jeweils eine bestimmte Informationsfolge kennzeichnende Zeichenkombinationen eingeschlossen. Diese Zeichenkombinationen werden im einfachsten Falle mittelbar oder unmittelbar von der Stellung des Längenzählers (7) abgeleitet. Der Längenzähler (7) ist in seiner Stellung durch ein Informationsträger-Anfangs- und/oder Endesignal definiert. Diese Definition ist bei Spulentonbandgeräten oder Kassettentonbandgeräten mit Hilfe
des bei solchen Geräten in aller Regel vorhandenen
Bandendschalters vorzunehmen. Will ein Benutzer ein
individuelles Wiedergabeprogramm zusammenstellen, bei
dem beliebige Informationsfolgen-Kombinationen auftreten können, so gibt er mit Hilfe des Tastenfeldes (5)
der gewünschten Reihenfolge entsprechende, mit den auf
dem Informationsträger aufgezeichneten Zeichenkombinationen kompatible Zeichen über die Schnittstellenschaltung (3) und die Befehls-/Informationsleitung (10)
in den Mikroprozessor (1) ein. Der Mikroprozessor (1)
schreibt die entsprechenden Daten über die Datenleitung (9) in den Speicher (2) und dort in den Abspielinformationsspeicher (22) ein. Der Programmspeicher (21)
enthält das eigentliche Arbeitsprogramm für das Betriebssystem. Nach Start der Antriebsvorrichtung der
betreffenden Aufzeichnungs-/Wiedergabeeinrichtung mittels
der Antriebssteuerung (8) werden die vom Längenzähler
(7) bzw. vom Informationsträger in den Mikroprozessor
(1) gelieferten, die jeweilige Stellung des Informationsträgers betreffenden Daten mit den im Abspielinformationsspeicher (22) gespeicherten Daten in Beziehung gesetzt. Im Falle einer Gleichheit der aus den
beiden genannten Quellen stammenden Daten schaltet
die Antriebssteuerung (8) die Antriebsvorrichtung der
Aufzeichnungs-/Wiedergabeeinrichtung in die Wiedergabestellung. Nach Ende der so eingeleiteten Wiedergabe
wird in gleicher Weise der Anfangspunkt des nächsten
vom Benutzer festgelegten Informationsträgerabschnitts
eingestellt. Die Antriebssteuerung (8) kann auf Grund
von ihr vom Mikroprozessor (1) gelieferten Daten die
genannte Antriebsvorrichtung einschalten, ausschalten
und/oder in ihrer Laufrichtung umschalten, so daß z.B.
auch in der Reihenfolge bereits zurückliegende Informationsfolgen erneut aufgesucht werden können. Alle Vorgänge der Informationsaufnahme, des Wiedergebens und der Kommunikation mit dem Benutzer werden durch den Mikroprozessor (1) gesteuert. Die hierfür nötigen Programme sind in dem Programmspeicher (21), der in aller Regel als ROM ausgeführt ist, abgelegt. Das Betriebsartenschalterfeld (52) innerhalb der Bedienungseinrichtung (5) wird dazu benutzt, die Funktion des Tastenfeldes je nach Stellung der Betriebsartenschalter zu bestimmen.

16 Patentansprüche
 1 Figur

-1-

<u>Patentansprüche</u>                          78 P 7 1 1 9

1. Betriebssystem zum gezielten Aufrufen von auf elektromotorisch bewegten Informationsträgern, insbesondere Magnetschichtbändern, gespeicherten Informationsfolgen, insbesondere Musik und/oder Sprachaufzeichnungen, dadurch g e k e n n z e i c h n e t , daß die einzelnen Informationsfolgen auf dem Informationsträger durch individuelle, als Adressen dienende, jeweils eine bestimmte Informationsfolge kennzeichnende Zeichenkombinationen eingeschlossen sind, daß ein durch ein Informationsträger-Anfangs- und/oder Endsignal in seiner Stellung definierter, bewegungsrichtungsabhängig vorwärts oder rückwärts arbeitender Längenzähler (7) vorgesehen ist, daß zum Aufrufen einer vorgegebenen Informationsfolge die Stellungen des Längenzählers (7) ständig in Beziehung mit vorgegebenen, der jeweils betreffenden Zeichenkombination entsprechenden Daten gesetzt werden, daß eine Antriebssteuerung (8) vorgesehen ist, mittels derer zumindest eine Antriebsvorrichtung einschaltbar, ausschaltbar und/oder in ihrer Laufrichtung umschaltbar zu machen ist, und daß eine Bedienungseinrichtung (5) vorgesehen ist, mittels derer beliebige Zeichenkombinationen auf dem Informationsträger aufzeichenbar und beliebige Informationsfolgen-Kombinationen vom Informationsträger aufrufbar zu machen sind.

2. Betriebssystem nach Anspruch 1, dadurch g e - k e n n z e i c h n e t , daß die jeweils eine bestimmte Informationsfolge kennzeichnende Zeichenkombination auf jeweils vor Anfang und nach Ende des Aufzeichnungsweges für die betreffende Informationsfolge geltende Zählstellung des Längenzählers (7) gewonnen wird.

**78 P 7 1 1 9**

3. Betriebssystem nach Anspruch 1 oder 2, dadurch g e k e n n z e i c h n e t , daß alle eine bestimmte Informationsfolge einschließenden Zeichenkombinationen jeweils aus zwei identischen Zeichen bestehen.

4. Betriebssystem nach Anspruch 1 oder 2, dadurch g e k e n n z e i c h n e t , daß alle eine bestimmte Informationsfolge einschließenden Zeichenkombinationen jeweils aus zwei nichtidentischen, jedoch in einer festen Beziehung zueinander stehenden Zeichen bestehen.

5. Betriebssystem nach einem der vorhergehenden Ansprüche, bei dem die Aufzeichnungs-/Wiedergabeeinrichtung für elektromotorisch bewegte Informationsträger ein Spulentonbandgerät, ein Kassettentonbandgerät, oder eine artverwandte Einrichtung zum Aufzeichnen von aus analogen Signalen bestehenden Informationsfolgen, vorzugsweise Musik- und/oder Sprachstücken ist, dadurch g e k e n n z e i c h n e t , daß die Zeichenkombinationen als durch einen Mehrfrequenzcode (MFC) repräsentierte Signale aufgezeichnet werden.

6. Steuereinrichtung für das Betriebssystem nach einem der Ansprüche 1 bis 5, dadurch g e k e n n z e i c h - n e t , daß ein Mikroprozessor (1) und ein über eine Datenleitung (9) fest mit dem Mikroprozessor (1) verbundener Speicher (2) vorgesehen sind, daß der Mikroprozessor (1) über eine Befehls-Informationsleitung (10) mit einer Schnittstellenschaltung (3) verbunden ist und daß die Bedienungseinrichtung (5), der Längenzähler (7) und die Antriebssteuerung (8) an die Schnittstellenschaltung (3) über jeweils individuelle Leitungen angeschlossen sind.

7. Steuereinrichtung nach Anspruch 6, dadurch
g e k e n n z e i c h n e t , daß der Speicher (2)
in zwei Bereiche, nämlich in einen Programmspeicher (21)
und einen Abspielinformationsspeicher (22) unterteilt
ist.

8. Steuereinrichtung nach Anspruch 6 oder 7, dadurch
g e k e n n z e i c h n e t , daß der Speicher (2)
als Halbleiterspeicher ausgeführt ist.

9. Steuereinrichtung nach Anspruch 8, dadurch
g e k e n n z e i c h n e t , daß der Speicher (2)
als RAM mit geringem Leitungsbedarf ausgeführt ist.

10. Steuereinrichtung nach einem der Ansprüche 6 bis 9,
dadurch g e k e n n z e i c h n e t , daß zur Sicherung der gespeicherten Daten eine Pufferstromversorgung
zur Speisung des Speichers (2) vorgesehen ist.

11. Steuereinrichtung nach einem der Ansprüche 6 bis 8,
dadurch g e k e n n z e i c h n e t , daß der
Speicher (2) als reprogrammierbarer permanenter Speicher
ausgeführt ist.

12. Steuereinrichtung nach Anspruch 11, dadurch
g e k e n n z e i c h n e t , daß der Speicher in
NMOS-Technologie realisiert ist.

13. Steuereinrichtung nach Anspruch 6, dadurch
g e k e n n z e i c h n e t , daß ein in aller Regel
bei Aufzeichnungs-/Wiedergabeeinrichtungen für elektromotorisch bewegte Informationsträger vorhandener In-
formationsträger-Anfangs-/Endschalter (6) über eine
Signalleitung mit der Schnittstellenschaltung (3) und
damit ebenfalls mit dem Mikroprozessor (1) über die Befehls-/Informationsleitung (10) verbunden ist.


14. Steuereinrichtung nach Anspruch 6, dadurch g e k e n n z e i c h n e t , daß die Bedienungseinrichtung (5) ein Tastenfeld (51) und Betriebsartenschalterfeld (52) enthält.


15. Steuereinrichtung nach Anspruch 6, dadurch g e k e n n z e i c h n e t , daß eine Ziffernanzeige (4) vorgesehen ist, die über eine Informationsleitung über die Schnittstellenschaltung (3) und damit ebenfalls mit dem Mikroprozessor (1) über die Befehls-/Informationsleitung (10) verbunden ist und mittels derer von einem Benutzer über das Tastenfeld (51) eingegebene Programmdaten, jeweils aktuelle Programmdaten und Betriebsarten, wie Störungsmeldungen u.a.m. sichtbar zu machen sind.


16. Steuereinrichtung nach Anspruch 6, dadurch g e k e n n z e i c h n e t , daß eine Zusatzvorrichtung zu dem in aller Regel bei Aufzeichnungs-/Wiedergabeeinrichtungen für elektromotorisch bewegte Informationsträger vorhandenen, mechanischen Zählwerk zum Registrieren der Weglänge vorgesehen ist, mittels derer bei jedem Wechsel der Zählstellung ein Signalimpuls an die Steuereinrichtung abgebbar ist.

0009579

Nummer der Anmeldung

EP 79 102 956.4

**Europäisches Patentamt**

# EUROPÄISCHER RECHERCHENBERICHT

| | EINSCHLÄGIGE DOKUMENTE | | KLASSIFIKATION DER ANMELDUNG (Int.Cl.³) |
|---|---|---|---|
| Kategorie | Kennzeichnung des Dokuments mit Angabe, soweit erforderlich, der maßgeblichen Teile | betrifft Anspruch | |
| P | <u>DE - A1 - 2 837 025</u> (SHARP K.K.)<br>* Ansprüche 1 bis 3 und 8; Zusammen-<br>fassung *<br><br>-- | 1,6,<br>9,14,<br>15 | G 11 B  15/02<br>G 11 B  15/06 |
| | <u>DE - A1 - 2 715 866</u> (SONY CORP.)<br>* Ansprüche 1 und 6; Seite 6, 3.<br>Absatz *<br><br>-- | 1 | |
| | <u>DE - A1 - 2 423 526</u> (LICENTIA PAT.-<br>VERW.-GMBH)<br>* Ansprüche 1,7,8 *<br><br>-- | 1,5 | **RECHERCHIERTE SACHGEBIETE (Int. Cl.³)**<br><br>G 06 F   7/24<br>G 06 F  15/40<br>G 11 B  15/00<br>G 11 B  27/00 |
| | <u>DE - A - 2 320 593</u> (BOLGIA)<br>* Ansprüche 1 und 2; Seiten 2 bis 5 *<br><br>-- | 1 | |
| A | <u>DE - A1 - 2 425 856</u> (LICENTIA PAT.-<br>VERW.-GMBH)<br>* Ansprüche 1 bis 9; Fig. *<br><br>-- | | |
| A | <u>DE - A1 - 2 340 292</u> (DIEHL DATEN-<br>SYSTEME)<br>* Ansprüche 1 und 2 *<br><br>---- | | **KATEGORIE DER GENANNTEN DOKUMENTE**<br><br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument<br>&: Mitglied der gleichen Patentfamilie, übereinstimmendes Dokument |

| ✗ | Der vorliegende Recherchenbericht wurde für alle Patentansprüche erstellt. |
|---|---|

| Recherchenort | Abschlußdatum der Recherche | Prüfer |
|---|---|---|
| Berlin | 04-12-1979 | LEITHÄUSER |

EPA form 1503.1  06.78